# EUROPÄISCHE PATENTSCHRIFT

(11) **EP 2 422 073 B1**
(45) Veröffentlichungstag und Bekanntmachung des Hinweises auf die Patenterteilung: **01.06.2016**
(21) Anmeldenummer: 10718074.7
(22) Anmeldetag: 23.04.2010
(51) Int. Cl.: F03B 13/08

(54) **VORRICHTUNG ZUR UMWANDLUNG VON WELLENENERGIE IN EINE LUFTSTRÖMUNG UND VERFAHREN ZUR DEREN HERSTELLUNG**
DEVICE FOR CONVERTING WAVE ENERGY INTO AN AIR FLOW AND METHOD FOR THE PRODUCTION THEREOF
DISPOSITIF POUR TRANSFORMER L'ÉNERGIE DE VAGUES EN COURANT D'AIR ET SON PROCÉDÉ DE PRODUCTION

(30) Priorität: 24.04.2009 DE 102009018560
(43) Veröffentlichungstag der Anmeldung: 29.02.2012
(73) Patentinhaber: Voith Patent GmbH, 89522 Heidenheim (DE)
(72) Erfinder: MAIER, Wolfgang, 89564 Nattheim (DE); HEATH, Tom, Graigburn IV10 8TT Scotland (GB)
(74) Vertreter: Dr. Weitzel & Partner
(86) Internationale Anmeldenummer: PCT/EP2010/002484
(87) Internationale Veröffentlichungsnummer: WO 2010/121816

(56) Entgegenhaltungen:
- EP-A2- 1 802 814
- WO-A2-2008/072241
- US-A- 4 564 312

## Beschreibung

Die Erfindung betrifft eine Vorrichtung zur Umwandlung von Wellenenergie in eine Luftströmung zur Verwendung in einem Wellenkraftwerk sowie ein Verfahren für deren Erstellung.

Wellenkraftwerke, die nach dem Prinzip einer oszillierenden Wassersäule arbeiten, sind bekannt. Hierzu wird auf die US 5,191,225 und die US 4 564 312 verwiesen. Gattungsgemäße Kraftwerke verwenden eine Wellenkammer, deren seeseitige Zuströmungsöffnung unter dem Wasserspiegel liegt, sodass anbrandende Wellen zu einem Zustrom und einer Variation des Wasserspiegels in der Kammer führen. Im oberen Teil der Wellenkammer befindet sich ein Luftraum, in dem der Luftdruck entsprechend zur Bewegung des Wasserspiegels in der Wellenkammer variiert, wobei ein Druckausgleich über einen Auslass zu einem Belüftungskanal bewirkt wird, in dem eine Luftturbine untergebracht ist. Als Luftturbinen werden typischerweise gleichsinnig umlaufende, bidirektional anströmbare Strömungsmaschinen, beispielsweise Wells-Turbinen, verwendet.

Der Bau geeigneter Wellenkammern für Wellenkraftwerke ist konstruktiv aufwendig, da Wellenkammern zur Ausnutzung unterschiedlicher Wellenhöhen bei einem gleichzeitig variierenden mittleren Wasserstand großbauende Einheiten darstellen. Des Weiteren stellen die starken Wellengänge in Gebieten, die sich für Wellenkraftwerke eignen, bei einer Wellenkammer ein Problem dar. Aus diesem Grund schlägt die US 4,613,252 vor, in einem Küstenfelsen zunächst einen Einschnitt anzulegen, sodass hinter einer schützenden Felsbarriere die Wellenkammer im Trockenen errichtet werden kann. Erst nach deren Fertigstellung wird die vorgelagerte Felsbarriere abgesprengt und der Zutritt von Meereswasser ermöglicht. Alternativ wird durch die DE 10 2007 010 576 A1 offenbart, Kammerstrukturen für ein Wellenkraftwerk vollständig in einem hierfür geeigneten Küstenfelsen auszubilden, wobei wiederum die Zutrittsöffnungen für das Meereswasser in einem letzten Erstellungsschritt angelegt werden.

Ferner wird durch die JP 60119379 A vorgeschlagen, Wellenkammern für die Energiegewinnung aus Meereswellen in einen Wellenbrecher zu integrieren. Die vorgeschlagene Lösung erfordert eine grundlegende Anpassung eines Wellenbrechers, sodass sich eine derartige Konstruktion nur bei einer Neuerstellung von Wellenbrechern anbietet. Des Weiteren wird durch die US 4,564,312 vorgeschlagen, ein Wellenkraftwerk in einem Wellenbrecher so anzulegen, dass anstatt großvolumiger Wellenkammern eine Vielzahl separater Welleneinströmungskompartimente vorliegt, wobei zustromseitig an typische Wellenverläufe angepasste Leitbleche eine weitgehend getrennte Zuströmung zu einzelnen Kompartimenten bewirken.

Zur Ausbildung von Wellenkammern auf Wellenbrechern, die aus Schüttungen, von Beton- oder Gesteinsteilen hohen Gewichts bestehen, wird durch die EP 1 802 814 B1 vorgeschlagen, auf der seeseitigen, ansteigenden Flanke des Wellenbrechers eine Abdeckung aus zueinander fluchtender Betonhohlteilen anzulegen, sodass mehrere Hohlkanäle entstehen, die zur Aufnahme eines lüft- und wasserdichten, flexiblen Schlauchs dienen, wobei die Zugangsseite des Schlauchs im eingebauten Zustand unter dem Wasserspiegel liegt und dessen Auslassseite in pneumatischer Verbindung zu einer Luftturbine steht. Die Betonhohlteile werden unmittelbar auf die Flanke des Wellenbrechers aufgelegt, sodass ein Versatz bzw. ein Verkippen aneinandergrenzender Betonhohlteile nicht zu vermeiden ist und der im Inneren aufgenommene flexible Schlauch die für die Funktion der Wellenkammer notwendige Dichtung übernehmen muss. Nachteilig an diesem Ansatz ist die geringe Standzeit des flexiblen Schlauchs, der als Verschleißteil in regelmäßigen Abständen ausgetauscht werden muss.

Der Erfindung liegt die Aufgabe zugrunde, eine Wellenkammeranordnung anzugeben, die die voranstehend genannten Nachteile überwindet. Dabei soll die Wellenkammeranordnung insbesondere auf einem bestehenden Wellenbrecher aufsetzbar sein. Ferner soll die Konstruktion auf Wellenbrecher mit unterschiedlichem oder variierendem Querschnitt anpassbar sein und sich durch konstruktive und fertigungstechnische Einfachheit sowie durch eine effiziente Wellenergieausnutzung auszeichnen.

Die voranstehend genannte Aufgabe wird durch die Merkmale der unabhängigen Ansprüche gelöst. Vorteilhafte Ausgestaltungen ergeben sich aus den Unteransprüchen.

Die Erfinder haben erkannt, dass eine Wellenkammeranordnung für ein Wellenkraftwerk zwei Komponenten umfassen sollte. Zum einen ein Kammerbauteil, das die eigentliche Wellenkammer bildet und das wenigstens ein Fertigbetonteil umfasst. Zum anderen ein Tragwerk, das sich gegen den Wellenbrecher abstützend, als Auflager für das Kammerbauteil dient, wobei das Tragwerk beispielsweise aus Stahlträgern aufgebaut ist. Dabei ermöglicht das Tragwerk eine Anpassung an eine beliebige Form des als Unterlage verwendeten, bestehenden Wellenbrechers und erlaubt so, das Kammerbauteil als vorfertigbares, standardisiertes Bauteil auszubilden.

Dabei kann das Kammerbauteil als einstückiges Fertigbetonteil insbesondere aus einem seewasserfesten Faserbeton angelegt sein, dessen Gewicht mit einem Kransystem üblicher Größenordnung handhabbar ist. Beispielsweise kann ein Maximalgewicht von 50 t vorgesehen sein. Gemäß einer alternativen Ausführung besteht das Kammerbauteil aus mehreren Fertigbetonteilen, die als standardisierte Teile angelegt sind. Beim Aneinandersetzen der einzelnen Fertigbetonteile auf dem Tragwerk, das eine ebene Unterlage mit einem definierten, vom Wellenbrecherprofil unabhängigen Verlauf vorgibt, können die Einzelmodule des Kammerbauteils präzise zueinander positioniert und anschließend verspannt werden, sodass durch Dichtungselemente in den Fügebereichen der Fertigbetonteile eine wasser- und luftdichte Wellenkammer entsteht. Des Weiteren ergibt sich durch das Tragwerk eine definierte Ausrichtung und Lage der Wellenkammer relativ zur einlaufenden See. Aufgrund der Standardisierung der einzelnen Fertigbetonteile besteht zudem eine einfache Größenanpassbarkeit an den vorhandenen Wellenbrecher, die dazu genutzt werden kann, die Längenerstreckung des Wassereinlaufbereichs der Wellenkammer an den durch den mittleren Wasserstand und die Scheitelhöhe des Wellenbrechers vorgegebenen Höhenunterschied anzupassen.

Des Weiteren ist die Herstellung einer weitgehend frei gewählten Außen- und Innenkontur des Kammerbauteils aufgrund der Verwendung von seewasserfestem Faserbeton möglich, sodass die Außenkontur an die Unterlage in Form des Tragwerks oder an lateral anschließende Komponenten angepasst werden kann, während die Innenkontur einen an die Charakteristik der Wasser- und Luftführung angepassten Querschnitt aufweist.

Das auf dem Tragwerk aufliegende Kammerbauteil übernimmt mit seiner seewärts gerichteten Außenseite die Wellenschutzfunktion des Wellenbrechers, sodass eine verschiebesichere Verbindung zum Tragwerk realisiert werden muss. Hierzu ist vorgesehen, Auflageflächen am Kammerbauteil komplementär zu Auflagern am Tragwerk auszubilden, sodass beim Absetzen mittels eines Kransystems ein Formschluss entsteht. Bevorzugt umfasst das Kammerbauteil eine erste Auflagefläche und wenigstens eine zweite Auflagefläche, die zueinander in Winkelstellung stehen. Dabei ist bevorzugt die Winkelstellung im Einbauzustand für eine vom Profilquerschnitt des Wellenbrechers vorgegebene Schnittebene gegeben.

Für eine vorteilhafte Ausgestaltung umfasst das Kammerbauteil einen ersten Schenkel mit einer ersten Auflagefläche und einen zweiten Schenkel mit einer zweiten Auflagefläche, wobei die Auflageflächen zueinander gewinkelt angelegt sind. Der erste Schenkel legt im Innern einer aufsteigenden Rampe für jenen Bereich der Wellenkammer fest, der von der Zutrittsöffnung für das durch die Wellenbewegung eingepresste Meereswasser ausgeht. Beim Welleneintritt wird im ersten Schenkel der ansteigende Wasserspiegel entlang dieser aufwärts gerichteten Rampe geführt, deren Steigung durch das zugeordnete Auflager des zur Abstützung dienenden Tragwerks festgelegt ist. Der zweite Schenkel des Kammerbauteils nimmt typischerweise einen Teil des Luftbereichs der Wellenkammer sowie den Belüftungskanal mit der darin angeordneten Luftturbine auf. Dabei ist eine Ausgestaltung denkbar, für die der zweite Schenkel im Wesentlichen waagrecht auf dem zugeordneten Auflager des Tragwerks aufliegt und der Belüftungskanal geschützt, relativ zur einlaufenden See leeseitig zur Außenumgebung mündet. Alternativ kann der zweite Schenkel eine gegenüber der Horizontalen geneigte Längsachse aufweisen, um eine radial durchströmte Luftturbine aufzunehmen. Ferner sind Ausgestaltungen möglich, für die das Kammerbauteil und entsprechend das Auflager auf dem Tragwerk mehrfach gewinkelt ausgebildet oder mit komplementär angelegten Vor- und Rücksprüngen versehen sind.

Durch den Formschluss zwischen den Auflageflächen am Kammerbauteil und den komplementären Auflagern am Tragwerk wird ein Verschieben des Kammerbauteils längs des Tragwerks, d.h. parallel zum Auflager, aufgrund anbrandender Wellen und durch das Eigengewicht des Tragwerks sicher verhindert. Dabei soll eine einfache Ablage des Kammerbauteils auf dem Tragwerk oder die sukzessive Ablage einzelner Module ausgehend von einem formschlüssig aufgesetzten ersten Modul möglich sein, gegen das sich die weiteren Module abstützen. Hierdurch wird der Aufwand zur Befestigung des Kammerbauteils auf dem Tragwerk verringert und die Standfestigkeit der Anlage verbessert.

Für eine vorteilhafte Weitergestaltung der Erfindung wird das Tragwerk so an den Verlauf des als Unterlage verwendeten Wellenbrechers angepasst, dass ein Übergreifen des Scheitels des Wellenbrechers realisiert wird. Hierzu wird das Tragwerk so angelegt, dass es sich auf beiden Flanken und bevorzugt zusätzlich auf dem Scheitel des Wellenbrechers abstützt. Hierdurch werden die durch die einlaufenden Wellen bewirkten Schubkräfte sicher abgefangen, ohne dass es einer aufwendigen Verankerung des Tragwerks am Wellenbrecher bedarf.

Wellenbrecher können mit einer Vielzahl aneinandergrenzender, erfindungsgemäßer Vorrichtungen über die gesamte Längenerstreckung versehen werden. Dabei wird das Kammerbauteil zur vereinfachten Anlage an ein benachbartes Bauteil bezüglich des äußeren Querschnitts quaderförmig ausgebildet. Aufgrund des bevorzugten, modularen Aufbaus und aufgrund der Verwendung standardisierter vorfertigbarer Komponenten, insbesondere von Fertigbetonteilen zur Ausbildung der eigentlichen Kammerstruktur, können variierende Quer- und Höhenerstreckungen des Wellenbrechers über dessen Längsverlauf abgefangen werden, indem lediglich ein das Kammerbauteil abstützendes Tragwerk lokal angepasst wird, sodass die Höhenlage und Orientierung des Auflagers für das Kammerbauteil konstant gehalten wird.

Nachfolgend wird die Erfindung anhand von Ausführungsbeispielen und in Verbindung mit Figurendarstellungen genauer erläutert. In diesen ist im Einzelnen Folgendes dargestellt:
- Figur 1: zeigt eine erfindungsgemäße Wellenkammeranordnung in Querschnittsansicht.
- Figur 2a: zeigt eine weitere erfindungsgemäße Wellenkammeranordnung mit mehreren Fertigbetonteilen zur Ausbildung eines Kammerbauteils in Längsschnittdarstellung.
- Figur 2b: zeigt das Ausführungsbeispiel aus. Figur 2a im Querschnitt.
- Figur 3: zeigt eine Ausgestaltungsalternative für eine erfindungsgemäße Wellenkammeranordnung in Querschnittsansicht.

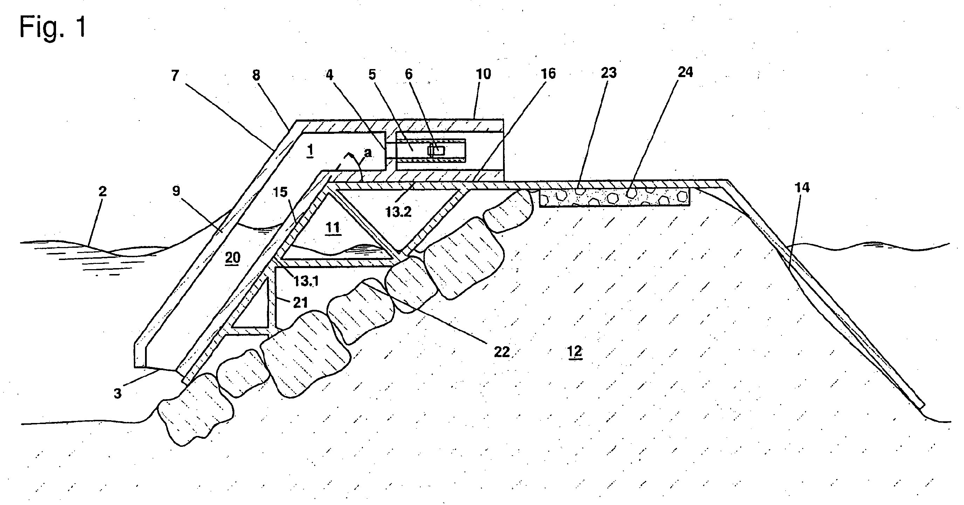

Figur 1 zeigt einen Wellenbrecher 12 im Profilquerschnitt, der aus mehreren unregelmäßig geformten Steinquadern angelegt ist. Hierauf wird für die Wellenkammeranordnung ein Tragwerk 11 in Form eines Stahlrahmes gesetzt, das, von der Seeseite ausgehend, den gesamten Wellenbrecher 12 bis zu dessen seeabgewandter Seite 14 übergreift. Mit einer Abstützung 21 gegen die seeseitige Flanke 22 und den Scheitel 23 des Wellenbrechers 12 bildet das Tragwerk 11 die Auflager 13.1, 13.2 für ein darauf aufgesetztes Kammerbauteil 7. Für die dargestellte Ausgestaltung ist das Tragwerk 11 zusätzlich auf einem Fundamentblock 24 auf dem Scheitel 23 des Wellenbrechers 12 verankern

Für die vorliegende Ausführung wird das Kammerbauteil 7 als ein einstückiges Fertigbetonteil 8 ausgebildet. Dabei umfasst das Kammerbauteil 7 einen ersten Schenkel 9 und einen dazu bezüglich der Auflagefläche in Winkelstellung (Winkel a) stehenden zweiten Schenkel 10. Im ersten Schenkel 9 beginnt ein Durchgangskanal 20, der den wassergefüllten Teil der Wellenkammer 1 umfasst. Dieser weist eine unter dem Wasserspielgel 2 liegende Zutrittsöffnung 3 auf und ist fluidisch mit dem Auslass 4 zu einem Belüftungskanal 5 im zweiten Schenkel 10 verbunden, in dem eine Luftturbine 6 angeordnet ist.

Durch die mit einem vorbestimmten Winkel ansteigende Rampe des durch den ersten Schenkel 9 beginnenden Durchgangskanals 20 kann der Vorwärtsimpuls einer einlaufenden Welle zusätzlich zur potenziellen Energie im Wellenkamm ausgenutzt werden und in einen Anstieg des Wasserspiegels in der Wellenkammer 1 mit einer daraus resultierenden Kompression bzw. beim Rückzug der Welle einer Dekompression des darüber befindlichen Luftvolumens umgesetzt werden. Zur Einstellung eines möglichst optimalen Rampenwinkels unabhängig vom Verlauf der seeseitigen Flanke 22 des Wellenbrechers 12 dienen ein vorbestimmter Neigungswinkel des Auflagers 3.1, das durch das Tragwerk 11 bereitgestellt wird, und die Wandungsgestaltung im Innern des Durchgangskanals 20. Dabei ist am ersten Schenkel 9 der Kontur des Auflagers 3.1 folgend eine erste Auflagefläche 15 angelegt.

Der zweite Schenkel 10 des Kammerbauteils 7, der neben einem Teil des Luftvolumens der Wellenkammer 1, den Auslass 4, den Belüftungskanal 5 und die Luftturbine 6 aufnimmt, weist für die vorliegende Ausgestaltung eine zweite Auflagefläche 16 auf, die im Wesentlichen horizontal verläuft. An diesen Verlauf ist das Auflager 13.2 des Tragwerks 11 angepasst. Aufgrund des mit dem Winkel a angelegten Verlaufs der einander zugewandten Flächen des Kammerbauteils 7 und des Tragwerks 11 in der gezeigten Querschnittsansicht kann ein Kammerbauteil 7 im Wesentlichen durch dessen Eigenschwere auf dem Tragwerk 11 fixiert werden. Demnach ist eine einfache Ablage eines Kammerbauteils 7 in Form eines Fertigbetonteils 8 aus seewasserfestem Faserbeton auf dem Tragwerk 11 möglich.

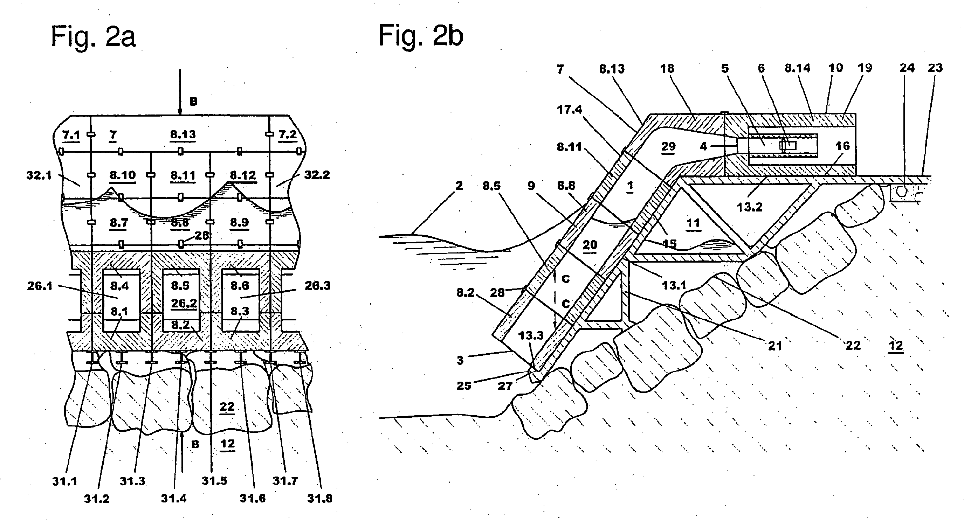

In den Figuren 2a, 2b ist eine Weitergestaltung der Erfindung dargestellt, wobei für Elemente, die mit der Ausführungsform gemäß Figur 1 übereinstimmen, die gleichen Bezugszeichen verwendet werden. Figur 2b zeigt eine Querschnittsansicht parallel zum Profilquerschnitt des Wellenbrechers 12 (Schnitt b-b aus Figur 2a), wobei die Darstellung auf den seeseitigen Teil der Wellenkammeranordnung beschränkt ist. Der seeabgewandte Teil kann entsprechend zu der in Figur 1 gezeigten Ausführung gestaltet sein. Figur 2a zeigt die Wellenkammeranordnung als Schnittansicht c-c zu Figur 2b.

Die in den Figuren 2a, 2b gezeigte Weiterentwicklung sieht zur Ausbildung des Kammerbauteils 7 mehrere Fertigbetonteile 8.1, ..., 8.14 vor. Durch diese Modularisierung kann auf einfache Weise eine Größenanpassung des Kammerbauteils 7 und insbesondere für dessen ersten Schenkel 9, der den seeseitigen Teil des Kammerbauteils 7 bildet, erzielt werden. Neben der einfachen Skalierbarkeit besteht der Vorteil der Modularisierung darin, kleine Baukomponenten zu handhaben, wobei aufgrund der durch das Tragwerk 11 zur Verfügung gestellten lagepräzisen Auflager 13.1, 13.2 sichergestellt ist, dass die einzelnen Fertigbetonteile 8.1, 8.n passgenau aneinander gefügt sind.

Für die dargestellte Ausführung ist der wasserführende Teil der Wellenkammer 1 aus drei parallel liegenden Kanälen 26.1, 26.2, 26.3 aufgebaut. Diese werden jeweils durch die als Standardbauteile für den ersten Schenkel 9 angelegten Fertigbetonteile 8.1,..., 8.12 gebildet, die in dichtender Anlage zueinander stehen. Ausgehend von der für den vorliegenden Standort notwendigen Länge des ersten Schenkels 9 wird die benötigte Anzahl der Fertigbetonteile 8.1,..., 8.12 festgelegt.

Bei der Erstellung wird zunächst auf einen bestehenden Wellenbrecher 12 ein stählernes Tragwerk 11 aufgesetzt, das typischerweise aus mehreren Rahmenelementen aus Stahl besteht. Die Befestigung des Tragwerks 11 auf dem Wellenbrecher 12 erfolgt zum einen über einen im Bereich des Scheitels 23 angelegten Fundamentblock 24 aus Beton, zum anderen ist an der seeseitigen Flanke 22 des Wellenbrechers 12 eine Abstützung 21 vorgesehen, die bis zu den Blöcken, aus denen der Wellenbrecher 12 aufgebaut ist, geführt wird. Diese Abstützung 21 wird an die lokalen Dimensionen des Wellenbrechers 12 angepasst. Nach dem Errichten des Tragwerks 11 entsteht ein Auflager 13.1, 13.2, 13.3, auf das in einem weiteren Verfahrensschritt ein vorliegend modulares Kammerbauteil 7 aufgesetzt wird. Besonders bevorzugt besteht das Auflager 13.1, 13.2 aus zwei oder mehreren Stahlträgern 31.1, ... , 31.8, die zur Abstützung des Kammerbauteils 7 eine einheitliche Auflagenhöhe und eine vorbestimmte Richtungsorientierung sowie ebene Auflageflächen zur Verfügung stellen.

In einem weiteren Erstellungsschritt wird eine erste Reihe mit den Fertigbetonteilen 8.1, 8.2, 8.3 gegen einen Anschlag 25 am Fußpunkt des Tragwerks 11 gesetzt. Damit besteht ein Formschluss durch das Führen der dritten Auflagefläche 17 gegen das Auflager 13.3 am Anschlag 25 und der tragwerkseitigen Außenwandungen der Fertigbetonteile 8.1, 8.2, 8.3 als Teil der ersten Auflagefläche 15 gegen das Auflager 13.1. Die weiteren Fertigbetonteile 8.4,..., 8.12 werden dann sukzessiv gegen die erste Reihe angelegt. Dabei können an den Stoßflächen der Fertigbetonteile 8.1, ..., 8.14 neben Dichtungselementen Mittel zur Selbstzentrierung vorgesehen sein. Diese sind im Einzelnen nicht in den Figuren dargestellt. Des Weiteren werden Dichtung und Sicherung der Fertigbetonteile 8.1, ... , 8.14 durch ein Verspannen mit Befestigungsmitteln 28 bewirkt. Diese können, wie skizziert, als Verbindung benachbarter Fertigbetonteile 8.1, ..., 8.14 ausgebildet sein. Alternativ erfolgt das Verspannen über mehrere Module des Kammerbauteils.

Nachfolgend wird der Anschluss zum zweiten Schenkel 10 mittels eines als Zwischenschenkelbauteil 18 ausgebildeten Fertigbetonteiles 8.13 angelegt, an das sich das Fertigbetonteil 8.14 als Standardbauteil für den zweiten Schenkel 19 anschließt. Dabei umfasst das den Richtungswechsel der Auflager 13.1, 13.2 übergreifende Zwischenschenkelbauteil 18 einen Sammelabschnitt 29 für die Kanäle 26.1, 26.2 und 26.3. Entsprechend reicht das Fertigbetonteil 8.13 über die Breite der Wellenkammeranordnung. Im Sammelabschnitt 29 wird die durch die Wellenbewegung entstehende Luftströmung zum Belüftungskanal 5 und durch die Luftturbine 6 im Fertigbetonteil 8.14 geleitet.

Des Weiteren kann in Längsrichtung des Wellenbrechers 12 eine weitere Wellenkammeranordnung angefügt sein. Entsprechend sind in Figur 2a seitlich anschließende Wellenkammeranordnungen 32.1, 32.2 skizziert, wobei sich die aneinander angrenzenden Wellenkammern gegenseitig seitlich abstützen. Hierzu sind bevorzugt die aneinandergrenzenden Seitenflächen benachbarter Kammerbauteile 7, 7.1, 7.2 parallel verlaufend angelegt, sodass eine passgenaue Anlage möglich ist. Werden die Fertigbetonteile 8.1, ..., 8.14 mit einem rechteckförmigen Querschnitt mit einheitlicher Querschnittshöhe ausgebildet, entsteht ferner zur Seeseite eine einheitliche Auftrefffläche für die anbrandenden Wellen.

Sind mehrere nebeneinander angeordnete Kammerbauteile 7 vorgesehen, besteht die Möglichkeit einer pneumatischen Kopplung benachbarter Wellenkammern. Alternativ kann jeder einzelnen Wellenkammer eine separate Luftturbine 6 zugeordnet sein. Auf diese Weise entsteht eine Sukzession erfindungsgemäßer Vorrichtungen längs eines Wellenbrechers 12, die aufgrund der Modularität und Skalierbarkeit an einen variierenden Querschnitt des Wellenbrechers sowie eventuell vorliegender Höhenvariationen über das Tragwerk 11 lokal angepasst werden können.

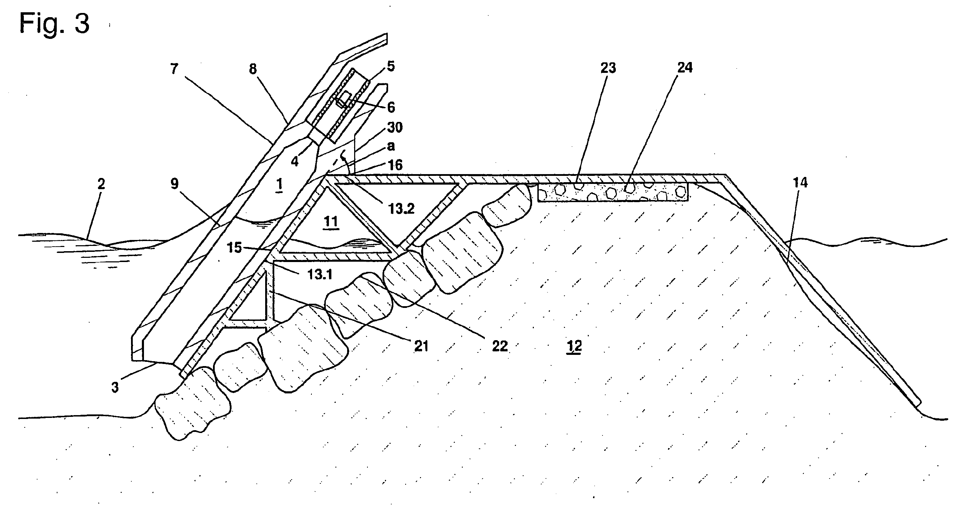

In Figur 3 ist wiederum in Querschnittansicht parallel zum Profil des Wellenbrechers 12 eine Ausgestaltungsalternative für eine erfindungsgemäße Wellenkammeranordnung gezeigt. Die mit den voranstehend beschriebenen Ausgestaltungen übereinstimmenden Komponenten werden mit den gleichen Bezugszeichen bezeichnet. Für das dargestellte Ausführungsbeispiel ist das Kammerbauteil 7 einstückig als Fertigbetonbauteil mit einer verlorenen Schalung ausgebildet. Im Gegensatz zu den voranstehend erläuterten Ausgestaltungen liegt eine einschenklige Form für die dargestellte Querschnittansicht vor.

Für das formschlüssige Aufsetzen des Kammerbauteils 7 auf das Tragwerk 11 besteht wiederum eine komplementäre Gestaltung des Verlaufs der Auflager 13.1, 13.2 zur ersten Auflagefläche 15 und zur zweiten Auflagefläche 16, die den Winkel a einnehmen. Dabei wird die zweite Auflagefläche 16 an einem Absatz 30 des Kammerbauteils 7 ausgebildet. Hierdurch entsteht eine form- und reibschlüssige Auflage des Kammerbauteils 7 auf dem Tragwerk 11. Dabei kann das Kammerbauteil 7 nach dem Ablegen zusätzlich über im Einzelnen nicht dargestellte Befestigungselemente am Tragwerk 11 gesichert werden.

Für eine in Figur 3 nicht dargestellte Weitergestaltung kann die Luftturbine 6 anstatt als Axialströmungsmaschine mit einer radialen Durchströmung angelegt werden, da die Luftein- und -auslässe aufgrund der freiliegenden Anordnung des Oberteils des Kammerbauteils 7 über den gesamten Umfang der Mantelfläche verteilt angeordnet werden können. Weitere Abwandlungen der Erfindung sind für einen Fachmann im Rahmen der nachfolgenden Schutzansprüche denkbar. Dabei ist es möglich, zusätzlich zur Verwendung von Fertigbetonteilen zur Ausbildung des Kammerbauteils, insbesondere zur Kopplung von Einzelkomponenten, Stahlzwischenelemente vorzusehen, die eine gewisse Flexibilität im Kammerbauteil ermöglichen. Dies gilt insbesondere im Fall einer modularen Ausbildung zur Abfederung von hohen Stoßbelastungen durch auftreffende Wellen.

### Bezugszeichenliste

- 1: Wellenkammer
- 2: Wasserspiegel
- 3: Zutrittsöffnung
- 4: Auslass
- 5: Belüftungskanal
- 6: Luftturbine
- 7: Kammerbauteil
- 8, 8.1, ..., 8.14: Fertigbetonbauteil
- 9: erster Schenkel
- 10: zweiter Schenkel
- 11: Tragwerk
- 12: Wellenbrecher
- 13.1, 13.2, 13.3: Auflager
- 14: seeabgewandte Seite
- 15: erste Auflagefläche
- 16: zweite Auflagefläche
- 17: dritte Auflagefläche
- 18: Zwischenschenkelbauteil
- 19: Standardbauteil für den zweiten Schenkel
- 20: Durchgangskanal
- 21: Abstützung
- 22: seeseitige Flanke
- 23: Scheitel
- 24: Fundamentblock
- 25: Anschlag
- 26.1, 26.2, 26.3: Kanal
- 27: dritte Auflagefläche
- 28: Befestigungselement
- 29: Sammelabschnitt
- 30: Absatz
- 31.1,...,31.7: Stahlträger
- 32.1, 32.2: anschließende Wellenkammeranordnung

## Patentansprüche

1. Wellenkammeranordnung, umfassend eine Wellenkammer (1) mit einer unter dem Wasserspiegel (2) liegenden Zugangsöffnung (3) und einem Auslass (4) zu einem Belüftungskanal (5), in dem eine Luftturbine (6) angeordnet ist,
**gekennzeichnet durch** die folgenden Merkmale:
die Wellenkammer (1) ist in einem Kammerbauteil ausgebildet, das wenigstens ein Fertigbetonteil (8, 8.1, ..., 8.n) umfasst;
das Kammerbauteil (7) liegt formschlüssig auf einem Tragwerk (11) auf;
das Tragwerk (11) ist aus Stahlträgern aufgebaut;
das Tragwerk (11) ist zur Abstützung an einen Wellenbrecher (12) angepasst und bildet ein Auflager (13.1) mit einem bestimmten Neigungswinkel für das Kammerbauteil (7);
das Kammerbauteil (7) umfasst eine erste Auflagefläche (15) und wenigstens eine zweite Auflagefläche (16), an denen das Kammerbauteil (7) auf Auflagern (13.1, 13.2) am Tragwerk (11) aufliegt;
die erste Auflagefläche (15) und die zweite Auflagefläche (16) stehen zueinander in Winkelstellung.

2. Wellenkammeranordnung nach Anspruch 1, **dadurch gekennzeichnet, dass** das Kammerbauteil (7) als einstückiges Fertigbetonteil (8) ausgebildet ist:

3. Wellenkammeranordnung nach Anspruch 1, **dadurch gekennzeichnet, dass** das Kammerbauteil (7) mehrere Fertigbetonteile (8.1, ..., 8.14) umfasst.

4. Wellenkammeranordnung nach Anspruch 3, **dadurch gekennzeichnet, dass** die Fertigbetonteile (8.1, ..., 8.14) als standardisierte Teile ausgebildet sind.

5. Wellenkammeranordnung nach einem der vorausgehenden Ansprüche,
**dadurch gekennzeichnet, dass** ein in einem ersten Schenkel (9) des Kammerbauteils (7) ausgebildeter Durchgangskanal (20) relativ zur Richtung der einlaufenden Wellen eine aufsteigende Rampe bildet.

6. Wellenkammeranordnung nach einem der vorausgehenden Ansprüche,
**dadurch gekennzeichnet, dass** die Wellenkammeranordnung seitlich für die unmittelbare Anlage an einer benachbarten Wellenkammeranordnung gestaltet ist.

7. Wellenkammeranordnung nach einem der vorausgehenden Ansprüche,
**dadurch gekennzeichnet, dass** das Tragwerk (11) den Wellenbrecher (12) wenigstens bis zu dessen seeabgewandter Seite (14) übergreift.

8. Verfahren für den Bau einer Wellenkammeranordnung, umfassend die Verfahrensschritte
Errichtung eines Tragwerks (11) aus Stahlträgern auf einen Wellenbrecher (12) zur Erstellung eines Auflagers (13.1, 13.2, 13.3) mit einem vorbestimmten Neigungswinkel für ein Kammerbauteil (7);
Aufsetzen des Kammerbauteils (7) auf das Auflager (13.1, 13.2), wobei das Kammerbauteil (7) eine Wellenkammer (1) ausbildet, die eine unter dem Wasserspiegel (2) liegende Zutrittsöffnung (3) und einen Auslass (4) umfasst, an den sich ein Belüftungskanal mit einer darin angeordneten Luftturbine (6) anschließt, und wobei das Kammerbauteil (7) durch Formschluss auf dem Tragwerk (11) gesichert wird.

## Claims

1. A wave chamber arrangement, comprising a wave chamber (1) with an access opening (3) situated below the water surface (2), and an outlet (4) leading to a ventilation channel (5), in which an air turbine (6) is located, **characterised by** the following features:
the wave chamber (1) is built in a chamber component which contains at least one prefabricated concrete element (8, 8.1, ...,8. n) ;
the chamber component (7) rests with an interlocking fit on a bearing structure (11);
the bearing structure (11) consists of steel girders;
the bearing structure (11) is adapted to be supported on a breakwater (12) and provides a resting position (13.1) with a certain inclination angle for the chamber component (7);
the chamber component (7) contains a first bearing surface (15) and at least one second bearing surface (16), on which the chamber component (7) rests on supports (13.1, 13.2) by the bearing structure (11);
the first bearing surface (15) and the second bearing surface (16) are positioned at an angle with respect to one another.

2. A wave chamber arrangement according to claim 1, **characterised in that** the chamber component (7) is provided as a single-piece prefabricated concrete element (8):

3. A wave chamber arrangement according to claim 1, **characterised in that** the chamber component (7) contains several prefabricated concrete elements (8.1,...,8.14).

4. A wave chamber arrangement according to claim 3, **characterised in that** the prefabricated concrete elements (8.1, ..., 8.14) are built as standardised parts.

5. The wave chamber arrangement according to one of the previous claims, **characterised in that** a passageway (20) provided in a first branch (9) of the chamber component (7) forms an increasing ramp with respect to the direction of the in-flowing waves.

6. The wave chamber arrangement according to one of the previous claims, **characterised in that** the wave chamber arrangement is designed laterally for leaning directly on a neighbouring wave chamber arrangement.

7. The wave chamber arrangement according to one of the previous claims, **characterised in that** the bearing structure (11) overlaps the breakwater (12) at least to the side (14) thereof facing away from the sea.

8. A method of building a wave chamber arrangement, comprising the following process steps
erection of a bearing structure (11) made of steel girders on a breakwater (12) for mounting a support (13.1, 13.2, 13.3) with a predetermined inclination angle for a chamber component (7) ;
setting the chamber component (7) on the support (13.1, 13.2), whereas the chamber component (7) forms a wave chamber (1) which comprises an access opening (3) situated below the water surface (2), and an outlet (4), to which a ventilation channel is connected to an air turbine (6) provided therein, and whereas the chamber component (5) is secured to the bearing structure (11) with an interlocking fit.

## Revendications

1. Ensemble chambre à vagues, comprenant une chambre à vagues (1) avec une ouverture d'accès (3) située au-dessous de la surface de l'eau (2), et une sortie (4) menant à un canal de ventilation (5), dans laquelle est située une turbine à air (6),
**caractérisé par** les fonctionnalités suivantes :
la chambre à vagues (1) est intégrée dans un élément de chambre contenant au moins un élément en béton préfabriqué (8, 8,1,...,8. n) ;
l'élément de chambre (7) reposant sur une structure portante (11) avec un engagement positif ;
la structure portante (11) est composée de poutres en acier ;
la structure portante (11) est adaptée pour être supportée sur un brise-lames (12) et constitue une position de repos (13.1) avec un certain angle d'inclinaison pour l'élément de chambre (7) ;
l'élément de chambre (7) contient une première surface portante (15) et au moins une deuxième surface portante (16), sur laquelle repose l'élément de chambre (7) sur des supports (13.1, 13.2) au niveau de la structure portante (11) ;
la première surface portante (15) et la seconde surface portante (16) sont positionnées à un angle donné l'une par rapport à l'autre.

2. Ensemble chambre à vagues selon la revendication 1, **caractérisé en ce que** l'élément de chambre (7) se présente comme élément en béton préfabriqué monobloc (8).

3. Ensemble chambre à vagues selon la revendication 1, **caractérisé en ce que** l'élément de chambre (7) contient plusieurs éléments de béton préfabriqué (8.1, ...., 8.14).

4. Ensemble chambre à vagues selon la revendication 3, **caractérisé en ce que** les éléments en béton préfabriqué (8.1, ..., 8.14) sont sous forme de pièces standardisées.

5. Ensemble chambre à vagues selon l'une quelconque des revendications précédentes, **caractérisé en ce qu'**un passage (20) pratiqué dans une première branche (9) de l'élément de chambre (7) forme une rampe ascendante par rapport à la direction des vagues déferlantes.

6. Ensemble chambre à vagues selon l'une quelconque des revendications précédentes, **caractérisé en ce que** l'ensemble chambre à vagues est conçu latéralement pour reposer directement sur un ensemble chambre à vagues voisin.

7. Ensemble chambre à vagues selon l'une quelconque des revendications précédentes, **caractérisé en ce que** la structure portante (11) chevauche le brise-lames (12) au moins sur le côté de celle-ci tournant le dos à la mer.

8. Procédé de construction d'un ensemble chambre à vagues, comprenant les phases de processus suivantes :
assemblage d'une structure portante (11) faite de poutres d'acier sur un brise-lames (12) pour le montage d'un support (13.1, 13.2, 13.3) avec un angle d'inclinaison prédéterminé pour un élément de chambre (7) ;
pose de l'élément de chambre (7) sur le support (13,1, 13,2), tandis que l'élément de chambre (7) forme une chambre à vagues (1) qui comprend une ouverture d'accès (3) située au-dessous de la surface de l'eau (2), et
une sortie (4) à laquelle est raccordé un canal de ventilation à une turbine à air (6) prévu dans celui-ci, et où l'élément de chambre (5) est fixé à la structure portante (11) avec un engagement positif.
